# EUROPEAN PATENT APPLICATION

(11) **EP 0 889 103 A2**
(43) Date of publication of application: **07.01.1999**
(21) Application number: 98112039.7
(22) Date of filing: 30.06.1998
(51) Int. Cl.: C09D 133/06, C09D 163/00, B05D 7/26

(54) **Carbamate-functional polymer composition**

(30) Priority: 30.06.1997 US 884613; 30.06.1997 US 885638
(71) Applicant: BASF CORPORATION, Mount Olive, New Jersey 07828-1234 (US)
(72) Inventor: Harris, Paul J., West Bloomfield, Michigan 48324 (US); Menovcik, Gregory G., Farmington Hills, Michigan 48334 (US)
(74) Representative: Fitzner, Uwe, Dr.

(57) **Abstract**

Disclosed is a composite coating, comprising a substrate; one or more primer coating layers disposed on said substrate; and at least one topcoat layer disposed on the outermost primer coating layer, wherein said outermost primer coating layer is obtained by reaction of a primer composition comprising an acrylic or novolac resin having primary carbamate functionality and an aminoplast resin.

Also claimed is a coating composition comprising a carbamate functional resin and an aminoplast corsslinker.

## Description

The present invention relates to crosslinkable primer coating compositions and particularly to the use of carbamate-functional acrylic or novolac polymers with aminoplast crosslinking agents in such primer compositions.

Coating finishes, particularly exterior coating finishes in the automotive industry, are generally applied in two or more distinct layers. One or more layers of primer coating composition may be applied to the uncoated substrate first, followed by one or more topcoat layers. Each of the layers supplies important properties toward the durability and appearance of the composite coating finish. The primer coating layers may serve a number of purposes. First, the primer coating may be applied in order to promote adhesion between the substrate and the coating. Secondly, the primer coating may be applied in order to improve physical properties of the coating system, such as corrosion resistance or impact strength (e.g., for improving resistance to gravel chipping). Third, the primer coating may be applied in order to improve the appearance of the coating by providing a smooth layer upon which the topcoat layers may be applied. The topcoat layer or layers contribute other properties, such as color, appearance, and light stabilization.

In the process of finishing the exterior of automobiles today, metal substrates are usually first coated with an electrocoat primer. While the electrocoat primer provides excellent surface adhesion and corrosion protection, it is often desirable to apply a second primer layer. The second primer layer may enhance the corrosion protection of the finish, but it also serves to provide a smoother surface than the electrocoat primer. This second primer layer prevents the orange peel of electrocoat surface from telegraphing through to cause the surface of the final topcoat layer to be less than the desired smoothness. The second primer also serves to provide a barrier layer between the electrocoat primer layer, which usually contains aromatic moieties and other materials that can cause yellowing on exposure to sunlight, and the topcoat. Thus, the second primer layer also helps to block low molecular weight, light sensitive species from passing from the electrocoat layer into the topcoat layers where such species could cause a shift in color (yellowing) or other problems.

Rehfuss et al. have disclosed carbamate-functional acrylic polymers in U.S. Pat. No. 5,474,811. The Rehfuss reference teaches that its carbamate-functional acrylic polymers can be used in clearcoat compositions of color-plus-clear composite coatings. Such clearcoat compositions exhibit improved environmental etch resistance. Primer compositions are not disclosed.

December et al., U.S. 5,431,791, disclose an electrodeposition coating composition comprising an aqueous mixture of a resin with a plurality of acid-salted primary amine groups and a curing agent with a plurality of cyclic carbonate groups. The composition is used to electrodeposit a coating layer onto an electrically conducting substrate. The deposited layer is cured to produce a cured coating layer. Electrocoat primer is usually overcoated with a primer-surfacer and at least one topcoat layer.

A primer composition has now been discovered that comprises a carbamate-functional acrylic or novolac resin and an aminoplast crosslinker such as a melamine resin crosslinker. The primer composition is used to prepare a composite coating on a substrate, wherein the composite coating comprises at least one primer layer, wherein the outermost primer layer is obtained from applying and reacting the primer composition of the invention, and at least one topcoat layer that is applied onto the outermost primer coating layer.

The composite coating of the composition has, as one layer, a primer coating layer that is obtained by reaction of a primer composition comprising an acrylic or novolac resin having carbamate functionality and an aminoplast resin. In a preferred embodiment, the carbamate functionality of the acrylic or novolac resin is primary carbamate functionality. The carbamate-functional acrylic or novolac resin preferably has at least two carbamate groups per molecule, and preferably has more than two carbamate groups per molecule, on average. In the case of the novolac resin preferably there are five or six carbamate groups per molecule, on average. The carbamate functionality may be represented by the structure:

-O-C(=O)-NHR

wherein R is H or alkyl, preferably of 1 to 4 carbon atoms. Preferably, R is H or methyl, and more preferably R is H. When R is H, then the carbamate group is a primary carbamate group. In a preferred embodiment, the carbamate functionality is a β-hydroxy carbamate functionality. A β-hydroxy primary carbamate group may be represented by the structure:

-CH(OH)-CH₂-O-C(=O)-NHR,

wherein R is as defined before. Again, R is preferably H or methyl, and more preferably R is H (a β-hydroxy primary carbamate group).

The acrylic resin having carbamate functionality may be obtained in three ways. In a first way, the acrylic resin may be prepared by copolymerization with an ethylenically unsaturated monomer having at least one carbamate group. Preferably, the carbamate-functional unsaturated monomer has one or more primary carbamate groups. In a second method of obtaining the acrylic resin having carbamate functionality, the acrylic resin may have a functional group that is reacted after the polymerization reaction to attach carbamate functional groups to the already-formed resin. According to this second method, then, the acrylic polymer is formed by copolymerizing an ethylenically unsaturated monomer that has a functional group convertible to a carbamate, preferably a primary carbamate, functionality.

One way to incorporate carbamate functionality is with an ethylenically unsaturated monomer carrying the carbamate functionality in its ester portion. Such monomers are known in the art and are described, for example, in U.S. Patent Nos. 3,479,328; 3,674,838; 4,126,747; 4,279,833; 4,340,497; and 5,412,049. Particularly preferred ethylenically unsaturated monomers with carbamate functionality are 2-hydroxyethyl carbamate (meth)acrylate, 2-hydroxypropyl carbamate (meth)acrylate, and 2-hydroxybutyl carbamate (meth)acrylate.

Carbamate-functional monomers can be prepared by known methods, and polymerized, along with other ethylenically-unsaturated monomers, using techniques well-known in the art. By way of example, one method of synthesizing an α,β-ethylenically unsaturated monomer involves reaction of a hydroxy ester with urea to form the carbamyloxy carboxylate. Another method of forming the carbamyloxy carboxylate is by reaction α,β -unsaturated acid with a hydroxy carbamate ester. Another method that results in a carbamate group is one in which ammonia or a primary amine or diamine is reacted with a cyclic carbonate, such as ethylene carbonate or propylene carbonate, followed by esterification of the hydroxyl group with acrylic or methacrylic acid to form the monomer. Preferred acrylics are those described in U.S. Patent No. 5,474,811.

A carbamate-functional acrylic resin may also be prepared by reaction of an already-formed polymer with another component to form a carbamate-functional group appended to the polymer backbone, as described in U.S. Patent No. 4,758,632. Groups that can be converted to carbamate include hydroxyl groups, isocyanate groups, cyclic carbonate groups, oxirane groups, and unsaturated bonds. Of the methods by which this may be done, one useful technique involves thermally decomposing urea to HNCO in the presence of a hydroxy-functional polymer. The reaction of HNCO with the hydroxyl group forms the carbamate group. Another technique involves reacting the hydroxyl groups of a hydroxyalkyl carbamate, such as hydroxypropyl carbamate, with isocyanate groups on the polymer. Isocyanate-functional acrylics are known in the art and are described, for example, in U.S. Patent No. 4,301,257. Isocyanate vinyl monomers are well-known in the art and include unsaturated m-tetraethyl xylene isocyanate (available from American Cyanamid under the tradename TMI®).

A third technique involves esterification of hydroxyl groups on an acrylic resin with an alkyl carbamate. Carbamate compounds having lower alkyl groups give faster transesterification. The esterification is catalyzed by Lewis acids, tin or titanate catalysts. Examples of useful catalysts include, without limitation, dibutyltin dilaurate, dibutyltin oxide, and isobutoxy titanate. The reaction is also catalyzed by Brönsted acids, such as para-toluene sulfonic acid.

Cyclic carbonate groups can be converted to carbamate groups by reaction with ammonia or a primary amine which ring opens the cyclic carbonate to form a β-hydroxy carbamate. Epoxy groups can be converted to carbamate groups by first converting to a cyclic carbonate group by reaction with carbon dioxide under pressure of from atmospheric up to supercritical CO₂ pressures, preferably from about 413682 Pa (60 psi) to about 1034205 Pa (150 psi), and at temperatures typically from about room temperature up to about 200°C, preferably from about 60 to about 150°C. A catalyst may be employed. Useful catalysts include any that activate an oxirane ring, such as tertiary amine or quaternary amine salts, including tetramethylammonium bromide; combinations of complex organotin halides and alkyl phosphonium halides, such as (CH₃)₃SnI, Bu₃SnI, Bu₄PI, and (CH₃)₄PI; potassium salts such as potassium carbonate and potassium iodide, preferably in combination with crown ethers, tin octoate, or calcium octoate; and the like. The cyclic carbonate group can then be converted to a carbamate group as described above. Unsaturated bonds can be converted to carbamate groups by first reacting with peroxide to form an epoxy group, then with CO₂ to form a cyclic carbonate, and finally with ammonia or a primary amine to form the carbamate.

In a preferred embodiment, the acrylic resin is prepared using a monomer having oxirane functionality or cyclic carbonate functionality. Cyclic carbonate-functional acrylic polymers are known in the art and are described, for example, in U.S. Patent No. 2,979,514.

In addition to the ethylenically unsaturated monomers having carbamate functionality or used to generate carbamate functionality in the finished polymer, one or more other ethylenically unsaturated monomers are employed as comonomers in forming the acrylic resins of the invention. The comonomers may be any of the type described above as useful in preparation of the hydroxy-functional resin. The carbamate-functional acrylic polymers or acrylic polymers to be adducted to produce a carbamate group are preferably polymerized according to the methods described above.

The monomer having one or more carbamate groups, or groups convertible to carbamate groups may be polymerized along with other unsaturated copolymerizable monomers known in the art. Such copolymerizable monomers include, without limitation, α,β -ethylenically unsaturated monocarboxylic acids containing 3 to 5 carbon atoms and the esters, nitriles, or amides of those acids; α,β-ethylenically unsaturated dicarboxylic acids containing 4 to 6 carbon atoms and the anhydrides, monoesters and diesters of those acids: vinyl esters, vinyl ethers, vinyl ketones, vinyl amides, and aromatic or heterocyclic aliphatic vinyl compounds. Representative examples of acrylic and methacrylic acids, amides and aminoalkyl amides include, without limitation, such compounds as acrylamide, N-(1,1-dimethyl-3-oxobutyl)-acrylamide, N-alkoxy amides such as methylolamides; N-alkoxy acrylamides such as n-butoxy acrylamide; N-aminoalkyl acrylamides or methacrylamides such as aminomethylacrylamide, 1-aminoethyl-2-acrylamide, 1-aminopropyl-2-acrylamide, 1-aminopropyl-2-methacrylamide, N-1-(N-butylamino)propyl-(3)-acrylamide and 1-aminohexyl-(6)-acrylamide and 1-(N,N-dimethylamino)-ethyl-(2)-methacrylamide, 1-(N,N,-dimethylamino)-propyl-(3)-acrylamide and 1-(N, N-dimethylamino)-hexyl-(6)-methacrylamide.

Representative examples of esters of acrylic, methacrylic, and crotonic acids include, without limitation, those esters from reaction with saturated aliphatic and cycloaliphatic alcohols containing 1 to 20 carbon atoms, such as methyl, ethyl, propyl, isopropyl, n-butyl, isobutyl, tert-butyl, 2-ethylhexyl, lauryl, stearyl, cyclohexyl, trimethylcyclohexyl, tetrahydrofurfuryl, stearyl, sulfoethyl, and isobornyl acrylates, methacrylates, and crotonates; and polyalkylene glycol acrylates and methacrylates.

Representative examples of other ethylenically unsaturated polymerizable monomers include, without limitation, such compounds as fumaric, maleic, and itaconic anhydrides, monoesters, and diesters.

Representative examples of polymerization vinyl monomers include, without limitation, such compounds as vinyl acetate, vinyl propionate, vinyl ethers such as vinyl ethyl ether, vinyl and vinylidene halides, and vinyl ethyl ketone. Representative examples of aromatic or heterocyclic aliphatic vinyl compounds include, without limitation, such compounds as styrene, α-methyl styrene, vinyl toluene, t-butyl styrene, and 2-vinyl pyrrolidone.

The preferred acrylic polymers may be prepared by using conventional techniques, such as free radical polymerization, cationic polymerization, or anionic polymerization in, for example, a batch or semi-batch process. For instance, the polymerization may be carried out by heating the ethylenically unsaturated monomers in bulk or in organic solution or aqueous dispersion in the presence of a free radical source, such as an organic peroxide or azo compound and, optionally, a chain transfer agent for a batch process; or, alternatively, the monomers, initiator(s), and any chain transfer agent may be fed at a controlled rate into a heated reactor charged with solvent in a semi-batch process.

Typical free radical sources are organic peroxides, including dialkyl peroxides, such as di-tert-butyl peroxide and dicumyl peroxide, peroxyesters, such as tert-butyl peroxy 2-ethylhexanoate and tert-butyl peroxy pivalate; peroxydicarbonates, such as di-2-ethylhexyl peroxydicarbonate and dicyclohexyl peroxydicarbonate; diacyl peroxides, such as dibenzoyl peroxide and dilauroyl peroxide; hydroperoxides, such as cumene hydroperoxide and tert-butyl hydroperoxide; ketone peroxides, such as cyclohexanone peroxide and methylisobutyl ketone peroxide; and peroxyketals, such as 1,1-bis(tert-butyl peroxy)-3,5,5-trimethylcyclohexane and 1,1-bis(tert-butyl peroxy) cyclohexane; as well as azo compounds such as 2,2'-azobis(2-methylbutanenitrile) and 1,1'-azobis(cyclohexanecarbonitrile). Typical chain transfer agents are mercaptans such as octyl mercaptan, n- or tert-dodecyl mercaptan, thiosalicylic acid, mercaptoacetic acid, and mercaptoethanol; halogenated compounds; and dimeric alpha-methyl styrene.

The free radical polymerization is usually carried out at temperatures from about 20°C to about 200°C, preferably from 90°C to 170°C. The reaction may conveniently be done at reflux, although reflux is not required. The initiator should be chosen so its half-life at the reaction temperature is preferably no more than thirty minutes.

The acrylic polymer will generally have a number average molecular weight of from about 1000 to about 40,000, preferably from about 2000 to about 10,000, and even more preferably from about 4000 to about 5000. The molecular weight can be determined by gel permeation chromatography using a polystyrene standard. The carbamate equivalent weight will generally be between about 200 and 1500, and more preferably it will fall between about 300 and 340. The theoretical glass transition temperature can be adjusted according to methods well-known in the art through selection and apportionment of the comonomers. In a preferred embodiment, the theoretical T_{g} of the carbamate-functional acrylic is between about -20°C and +80°C, more preferably between about 0 and +10. The molecular weight and theoretical T_{g} of acrylic resin may be optimized for such properties as stone chip resistance or sandability as is done in the art.

It is also possible for the acrylic resin to have other groups reactive with the aminoplast crosslinker, such as hydroxyl groups. For example acrylic polymers can be prepared by copolymerizing one or more hydroxy-functional ethylenically unsaturated monomers with one or more ethylenically unsaturated monomers having carbamate groups, optionally and preferably along with other polymerizable comonomers.

The novolac epoxy resin may be epoxy phenol novolac resins or epoxy cresol novolac resins having the formula I: 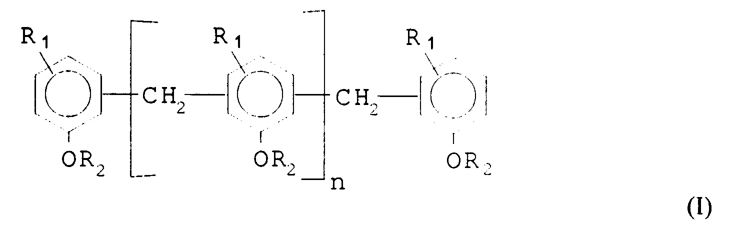 in which R₁ is H or methyl, R₂ may be H or a glycidyl group, with the proviso that on average at least two R₂ groups per molecule are glycidyl groups, and n is from 0 to 12, preferably from 3 to 8, and more preferably 3 or 4. The novolac resin may also be an aromatic novolac bisphenol A resin, having either the formula II 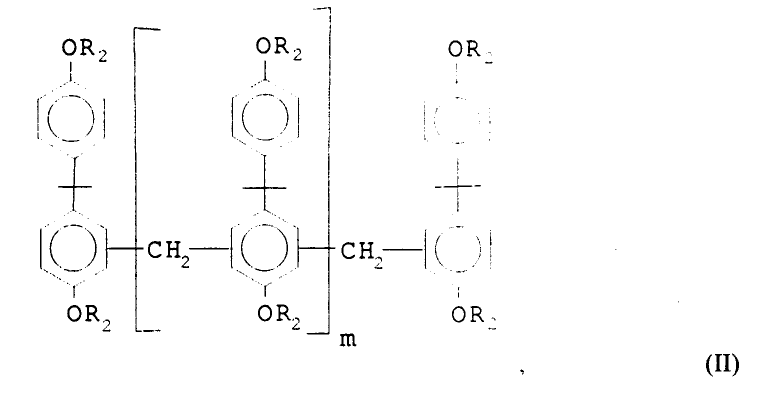 or the formula III 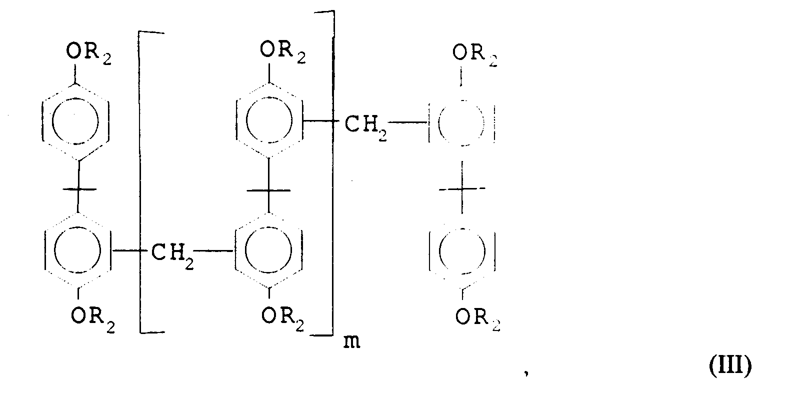 wherein, for each formula, R₂ may be H or a glycidyl group, with the proviso that on average at least two R₂ groups per molecule are glycidyl groups, and m is from 0 to 4, preferably from 0 to 2.

Although not all of the oxirane groups must be converted, preferably all of the oxirane coups are converted to carbonate groups. The oxirane groups can be converted to carbamate groups by a two-step synthesis. In a first step, a cyclic carbonate group is formed by reaction with carbon dioxide. This can be done at any pressure from atmospheric up to supercritical CO₂ pressures, but is preferably carried out under elevated pressure (e.g., 413682-1034205 Pa (60-150 psi)). The temperature for this reaction may be from about room temperature up to about 200°C, and preferably is from about 60 to about 150°C. Useful catalysts include any that activate an oxirane ring, such as tertiary amine or quaternary salts, such as tetramethyl ammonium bromide; combinations of complex organotin halides and alkyl phosphonium halides, such as (CH₃)₃SnI, Bu₃SnI, Bu₄PI, and (CH₃)₄PI; potassium salts such is potassium carbonate and potassium iodide, preferably in combination with crown ethers, tin octoate, or calcium octoate.

In the second step of the synthesis of carbamate groups from oxirane groups the cyclic carbonate groups formed in the first step can be converted to carbamate groups by reaction with ammonia or a primary amine, which ring opens the cyclic carbonate to form a β-hydroxy carbamate. Suitable amino compounds have one primary amine group, including, without limitation, methyamine, ethylamine, n-propylamine, n-butylamine, other alkylamines, and mixtures of these. Amino compounds having one primary amine group and a different functional group, such also alkanolamines, are also suitable. Examples include, without limitation, ethanolamine and isopropylamine. When ammonia is reacted with the cyclic carbonate groups, the reaction is usually carried out by introducing a stream of ammonia into the reaction mixture at atmospheric pressure and mild temperatures, for example up to about 50°C. When a primary amine, mixture of primary amines, or mixture of primary amine with ammonia is reacted with the cyclic carbonate groups, the reaction may be carried out up to about the boiling point of the primary amine.

The carbamate functional novolac resin will generally have a number average molecular weight of from about 1000 to about 40,000, preferably from about 2000 to about 10,000, and even more preferably from about 4000 to about 5000. The molecular weight can be determined by gel permeation chromatography using a polystyrene standard. The carbamate equivalent weight will generally be between about 200 and 1500, and more preferably it will fall between about 300 and 340.

The compositions of the present invention include aminoplast resins. Suitable aminoplast resins are amine/aldehyde condensates, preferably at least partially etherified, and most preferably fully etherified. Melamine and urea are preferred amines, but other triazines, triazoles, diazines, guanidines, or guanamines may also be used to prepare the alkylated amine/aldehyde aminoplast resins crosslinking agents. The aminoplast resins are preferably amine/formaldehyde condensates, although other aldehydes, such as acetaldehyde, crotonaldehyde, and benzaldehyde, may be used. Non-limiting examples of preferred aminoplast resins include monomeric or polymeric melamine formaldehyde resins, including melamine resins that are partially or fully alkylated using alcohols that preferably have one to six, more preferably one to four, carbon atoms, such as hexamethoxy methylated melamine; urea-formaldehyde resins including methylol ureas and siloxy ureas such as butylated urea formaldehyde resin, alkylated benzoguanimines, guanyl ureas, guanidines, biguanidines or polyguanidines. Monomeric melamine formaldehyde resins are particularly preferred. The preferred alkylated melamine formaldehyde resins are commercially available, for example from Monsanto Corp., St. Louis, MO, under the trademark RESIMENE or from Cytec Industries, West Patterson, NJ, under the trademark CYMEL.

The melamine resin preferably comprises from about 15% by weight to about 40% by weight, and more preferably from about 20% by weight to about 30% by weight, a particularly preferably about 35% by weight of the primer composition, based upon the combined weight of melamine resin and carbamate functional acrylic resin. One preferred ratio of equivalents is from 1:1 up to 1:1.2 equivalents of carbamate groups to crosslinker reactive groups.

The compositions may include one or more catalysts. Useful catalysts include, without limitation, blocked acid catalysts, such as para-toluene sulfonic acid, dodecylbenzene sulfonic acid, dinonylnaphthylene disulfonic acid, and so on, and particularly these acids blocked with a group that volatilized during the curing reaction. Preferred among these are blocked dodecylbenzene sulfonic acids.

Although the coating compositions of the present invention may be used as powder coatings, the coating compositions preferably further include one or more solvents, preferably selected from organic solvents. In one highly preferred embodiment, the compositions are solvent-borne coating compositions. Preferably, the coating compositions are organic solvent solutions. The solvent may be present in an amount of from about 15 percent to about 99 percent by weight, preferably from about 20 percent to about 80 percent by weight, and more preferably from about 20 percent to about 50 percent by weight.

The selection of particular solvents may be made according to methods well-known in the art. The optimum solvent or mixture of solvents may be arrived at by straightforward testing of the particular mixture. In general useful solvents will include, without limitation, esters, particularly acetates, propionates, and butyrates, alcohols, ketones, aromatic solvents, glycol ethers and esters, aprotic amides, aprotic sulfoxides, and aprotic amines. Non-limiting examples of useful solvents include methyl ethyl ketone, methyl isobutyl ketone, amyl acetate, butyl acetate, ethylene glycol butyl ether, propylene glycol methyl ether acetate, xylene, toluene, isopropanol, butanol, naphtha and other blends of aromatic hydrocarbons, N-methylpyrrolidone, isobutyl isobutyrate, and water.

Preferably, coating compositions of the invention utilizing either the acrylic or novolac resins are nonaqueous. However, aqueous coating compositions of the invention can be formulated by utilizing water as a solvent, and optionally, one or more organic solvents, which may be used to enhance dispersion or emulsion stability.

The novolac resin may be modified to contain nonionic stabilizing groups or acid or amine groups that may be salted to stabilize a dispersion or emulsion of the resin. Preferably, the coating compositions containing the novolac resin of the invention are nonaqueous and the novolac resin has functional groups selected exclusively from oxirane, carbonate, carbamate, and hydroxy carbamate groups, particularly primary carbamate or hydroxy carbamate groups.

The primer coating compositions according to the invention may further include pigments such as are commonly used in the art, including color pigments, corrosion inhibiting pigments, conductive pigments, and filler pigments. Illustrative examples of these are metal oxides, chromates, molybdates, phosphates, and silicates, carbon black, and silicas. The pigments are generally dispersed with resins, preferably with resin compositions including the carbamate-functional acrylic or the melamine resin of the invention, or dispersants and solvent to form pigment pastes using equipment, such as attritors and sand mills, and methods widely-used in the art.

Other conventional materials, such as dyes, flow control or rheology control agents, and so on may be added to the compositions.

The coating compositions of the present invention can be applied over many different substrates, including wood, metals, glass, cloth, plastic, foam, metals, and elastomers. They are particularly preferred as primers on automotive articles, such as metal bodies or elastomeric fascia. When the article is a metallic article, it is preferred to have a layer of electrocoat primer before application of the primer coating composition of the invention.

The primer coating composition of the invention is applied directly to the substrate or over one or more other layers of primer, such as the electrocoat primer. The applied primer coating composition is then cured to form a primer coating layer. The primer coating layer formed from the primer coating composition of the invention is the outermost primer layer of the composite coating. A topcoat composition is applied over the primer coating layer and cured to form a topcoat layer, the substrate at that point is then covered with a composite coating that has at least one layer of primer coating derived from the inventive compositions and at least one layer of topcoat.

In a preferred embodiment, the coating composition of the present invention is overcoated with a topcoat applied as a color-plus-clear (basecoat-clearcoat) topcoat. Crosslinking compositions are preferred as the topcoat layer or layers. Coatings of this type are well-known in the art. For example, the topcoat is preferably a clearcoat according to U.S. Pat. No. 5,474,811, applied wet-on-wet over a layer of a basecoat composition. Suitable pigmented color coat or basecoat compositions are well-known in the art. Polymers known in the art to be useful in basecoat and clearcoat compositions include, without limitation, acrylics, vinyl, polyurethanes, polycarbonates, polyesters, alkyds, and polysiloxanes. Acrylics and polyurethanes are preferred. Thermoset basecoat and clearcoat compositions are also preferred, and, to that end, preferred polymers comprise one or more kinds of crosslinkable functional groups, such as e.g. carbamate, hydroxy, isocyanate, amine, epoxy, acrylate, vinyl, silane, or acetoacetate. The polymer may be self-crosslinking, or, preferably, the composition may include a crosslinking agent such as a polyisocyanate or an aminoplast resin of the kind described above.

Each layer of the composite coatings of the invention can be applied to an article to be coated according to any of a number of techniques well-known in the art. These include, for example, spray coating, dip coating, roll coating or curtain coating. If an initial electrocoat primer layer is applied to a metallic substrate, the electrocoat primer is applied by electrodeposition. For automotive applications, the primer coating composition of the invention and the topcoat layer or layers are preferably applied by spray coating, particularly electrostatic spray methods. Coating layers of one mil or more are usually applied in two or more coats, separated by a time sufficient to allow some of the solvent to evaporate, or "flash," from the applied layer. The flash may be at ambient or elevated temperatures, for example, the flash may use radiant heat. The coats as applied can be from 12,7 µm (0.5 mil) up to 76,2 µm (3 mils) dry, and a sufficient number of coats are applied to yield the desired final coating thickness.

The outermost primer layer, which is formed by reacting the primer compositions of the invention, is reacted before the topcoat is applied. Color-plus-clear topcoats are usually applied wet-on-wet. The compositions are applied in coats separated by a flash, as described above, with a flash also between the last coat of the color composition and the first coat the clear. The two coating layers are then cured simultaneously. Preferably, the cured basecoat layer is 12,7 µm (0.5 mil) to 38,1 µm (1.5 mils) thick, and the cured clear coat layer is 25,4 µm (1 mil) to 76,2 µm (3 mils), more preferably 40,6 µm (1.6 mils) to 55,9 µm (2.2 mils), thick.

The coating compositions described are preferably cured with heat. Curing temperatures are preferably from about 70°C to about 180°C, and particularly preferably from about 76,7°C (170°F) to about 93,3°C (200°F) for a composition including an unblocked acid catalyst, or from about 115,6°C (240°F) to about 135°C (275°F) for a composition including a blocked acid catalyst. Typical curing times at these temperatures range from 15 to 60 minutes, and preferably the temperature is chosen to allow a cure time of from about 15 to about 30 minutes. In a preferred embodiment, the coated article is an automotive body or part.

The invention is further described in the following examples.

### Examples

### Example 1. Preparation of Carbamate-Functional Acrylic Polymer

A round-bottom glass flask equipped with a stirrer, nitrogen line, thermocouple, and monomer addition line was charged with 511.2 grams of propylene glycol monomethyl ether. The contents of the flask were heated to 106°C. A mixture of 469.6 grams glycidyl methacrylate carbonate (commercially available from Dow Chemical Company, Midland, MI), 192.5 grams styrene, 467.0 grams ethylhexyl acrylate, 152.0 grams ethylhexyl methacrylate, and 103 grams VAZO® 67 (an azo initiator, available from E.I. Du Pont de Nemours, Wilmington, DE) was added at a constant rate over about four hours. The temperature was maintained at 106°C. The addition line was flushed with 20 grams of propylene glycol monomethyl ether. After the monomer addition was completed, a solution of 19.2 grams of VAZO® 67 in 44 grams of propylene glycol monomethyl ether was added over a period of 25 minutes. The addition line was again flushed, using 10 grams of propylene glycol monomethyl ether. The product held at 106°C for an additional hour and forty-five minutes. The measured solids content was 68.55% nonvolatile by weight.

A round-bottom glass flask equipped with a stirrer was charged with 800 grams of the product from the first synthesis and 213 grams of methanol. A gentle stream of ammonia was bubbled into the polymer solution for six hours, with an exotherm peak at 39°C after two hours. The solution was left for 18 hours, after which an infrared spectroscopy scan indicated that the reaction between carbonate and amine was complete. The polymer solution was heated to distill off the methanol. 195 grams of methanol were recovered.

### Example 2. Coating Films Containing Carbamate-Functional Acrylic Polymer and Melamine Crosslinking Agent

The carbamate-functional acrylic polymer of Example 1 was formulated into coating compositions using two different melamine resins and three different ratios of melamine resin to acrylic resin.

| | A | B | C | D | E | F |
|---|---|---|---|---|---|---|
| Acrylic of Example 1 | 120 g | 112.9 g | 105.9 g | 120.0 g | 112.9 g | 105.9 g |
| RESIMENE 717¹ | 17.9 | 23.8 | 29.8 | | | |
| RESIMENE 755¹ | | | | 15.0 | 20.0 | 25.0 |
| Additive² | 0.25 | 0.25 | 0.25 | 0.25 | 0.25 | 0.4 |
| catalyst³ | | | | 5.6 | 5.4 | 5.4 |
| EGBE⁴ | 55.6 | 56.7 | 57.8 | 55.7 | 57.8 | 59.8 |

| | | | | | | |
|---|---|---|---|---|---|---|
| 1. Available from Monsanto Corp., St. Louis, MO. | | | | | | |
| 2. A 60% by weight solution of polybutyl acrylate in xylene | | | | | | |
| 3. A solution of isopropylamine-blocked dodecylbenzene sulfonic acid | | | | | | |
| 4. Ethylene glycol monobutyl ether | | | | | | |

The coating compositions were applied to electrocoated phosphated steel panels by spray application. Two panels were prepared for each sample. One panel was baked for 20 minutes at 132,2°C (270°F); the second panel was baked for 25 minutes at 162,8°C (325°F). The coated panels were then tested according to the following test methods: Tukon hardness, ASTM D 1475 (method A); Tape Adhesion, ASTM D 3359; and gravel chip test, ASTM D 3170 and SAE J400.

| Bake: 20' @ 132,2°C (270°F) | | | | | | |
|---|---|---|---|---|---|---|
| Test | A | B | C | D | E | F |
| film thickness | 1.0 | 0.9 | 1.0 | 1.0 | 1.0 | 1.0 |
| Tukon hardness | 5.66 | 6.06 | 7.07 | 10.3 | 11.7 | 12.8 |
| ICA (%removal) | 95P | 80P | 80P | 95T | 100T | 100T |
| gravel test rating | 1 | 1 | 1 | 5 | 3 | 3 |

| Bake: 25' @ 162,8°C (325°F) | | | | | | |
|---|---|---|---|---|---|---|
| | A | B | C | D | E | F |
| film thickness | 1.0 | 0.8 | 0.8 | 1.0 | 1.0 | 1.0 |
| Tukon hardness | 7.57 | 9.01 | 10.70 | 11.3 | 13.4 | 14.3 |
| ICA (%removal) | 5T | <1 | <1 | 100T | 100T | 80T |
| gravel test rating | 6 | 7 | 7 | 6 | 4 | 4-5 |

### Example 3. Preparation of Novolac Epoxy Carbamate

A round-bottom glass flask equipped with a stirrer was charged with 1667.5 grams of a commercial epoxy novolac resin (3.6 epoxide groups per molecule on average, obtained from Ciba Geigy Corp., Hawthorne, NY), 30.0 grams of tetrabutylammonium bromide, and 565.8 grams of monomethyl ether of propylene glycol. The contents of the flask were held for six hours at temperatures between about 101 to about 107°C under a pressurized atmosphere of carbon dioxide (827364 Pa (120 psi)). The product of carbonated novolac epoxy was reduced to 71% nonvolatiles with 337.3 grams acetone.

A round-bottom glass flask equipped with a stirrer was charged with 800 grams of the solution of carbonated novolac epoxy and 200 grams of methanol. A gentle stream of ammonia was bubbled into the polymer solution for four hours, with an exotherm peak at 33°C. An infrared spectroscopy scan indicated that the reaction between carbonate and amine was complete. The flask was purged with nitrogen. The polymer solution was mixed with about 3 ml of water and then heated to distill off the methanol and acetone, and 197 grams of distillate were recovered. The carbamate-functional product was 61% nonvolatile.

### Example 4. Coating Films Containing Carbamate Novolac and Melamine Crosslinking Agent

The carbamate-functional novolac of Example 3 was formulated into coating compositions using two different melamine resins and three different ratios of melamine resin to novolac resin.

| | A | B | C | D | E | F |
|---|---|---|---|---|---|---|
| Novolac of Example 3 | 139.3 g | 131.1 g | 122.9 g | 139.3 g | 131.1 g | 122.9 g |
| RESIMENE 717¹ | 17.9 | 23.8 | 29.8 | | | |
| RESIMENE 755¹ | | | | 15.0 | 20.0 | 29.8 |
| additive² | 0.25 | 0.25 | 0.25 | 0.25 | 0.25 | 0.25 |
| catalyst³ | | | | 5.4 | 5.4 | 5.4 |
| EGBE⁴ | 36.2 | 38.5 | 40.7 | 36.4 | 39.5 | 42.7 |

| | | | | | | |
|---|---|---|---|---|---|---|
| 1. Available from Monsanto Corp., St. Louis, MO. | | | | | | |
| 2. A 60% by weight solution of polybutyl acrylate in xylene | | | | | | |
| 3. A solution of isopropylamine-blocked dodecylbenzene sulfonic acid | | | | | | |
| 4. Ethylene glycol monobutyl ether | | | | | | |

The coating compositions A-C were applied to electrocoated phosphated steel panels by spray application. Two panels were prepared for each sample. One panel was baked for 20 minutes at 132,2°C (270°F); the second panel was baked for 25 minutes at 162,8°C (325°F). The coated panels were then tested according to the following test methods: Tukon hardness, ASTM D 1475 (method A); Tape Adhesion, ASTM D 3359; and gravel chip test, ASTM D 3170 and SAE J400.

| Bake: 20' @ 132,2°C (270°F) | | | |
|---|---|---|---|
| Test | A | B | C |
| film thickness | 1.0 | 1.0 | 1.0 |
| Tukon hardness | 18.92 | 19.42 | 18.92 |
| Tape adhesion (%removal) | 95P | 95P | 95P |
| gravel test rating | 0 | 1 | 1 |

| Bake: 25' @ 162,8°C (325°F) | | | |
|---|---|---|---|
| | A | B | C |
| film thickness | 1.0 | 1.0 | 1.1 |
| Tukon hardness | 28.02 | 28.02 | 29.85 |
| ICA (%removal) | <1 | <1 | <1 |
| gravel test rating | 7 | 7 | 7 |

The invention has been described in detail with reference to preferred embodiments thereof. It should be understood, however, that variations and modifications can be made within the spirit and scope of the invention.

## Claims

1. A composite coating, comprising a substrate; one or more primer coating layers disposed on said substrate; and at least one topcoat layer disposed on the outermost primer coating layer, wherein said outermost primer coating layer is obtained by reaction of a primer composition comprising:
(a) a resin selected from the group consisting of an acrylic resin having primary carbamate functionality and a novolac resin having carbamate functionality; and
(b) an aminoplast resin.

2. A composite coating according to claim 1, comprising an electrocoat primer layer in between the substrate and the outermost primer coating layer.

3. A composite coating according to claim 1 or claim 2, comprising as topcoat layers an inner layer of basecoat and an outer layer of clearcoat.

4. A composite coating according to any one of claims 1-3, wherein said carbamate functionality on resin (a) is a β-hydroxy carbamate functionality.

5. A composite coating according to any one of claims 1-4, wherein said aminoplast resin is a melamine resin.

6. A composite coating according to any one of claims 1-5, wherein resin (a) is a novolac resin comprising a primary carbamate functionality.

7. A composite coating according to any one of claims 1-6, wherein resin (a) is a novolac resin having on average at least two carbamate groups per molecule.

8. A composite coating according to any one of claims 1-7, wherein said novolac resin having carbamate functionality is obtained by:
(a) reacting a novolac epoxy with carbon dioxide to form a resin having carbonate groups;
(b) reacting said carbonate groups with at least one compound selected from ammonia, amino resins having at least one primary amine, and mixtures thereof.

9. A composite coating according to any one of claims 1-8, wherein said resin (a) is a novolac resin that essentially reacts through said carbamate groups in forming the outermost primer coating layer.

10. A composite coating according to claim 5, wherein resin (a) is an acrylic resin and the melamine resin is a monomeric melamine resin.

11. A composite coating according to claim 5, wherein resin (a) is an acrylic resin and the melamine resin is a polymeric melamine resin.

12. A composite coating according to any one of claims 1-5, 10 or 11, wherein resin (a) is an acrylic resin having primary carbamate functionality obtained by:
(a) forming an acrylic polymer having oxirane groups;
(b) reacting said oxirane groups with carbon dioxide to form carbonate groups;
(c) reacting said carbonate groups with ammonia.

13. A composite coating according to any one of claims 1-5 or 10-12, wherein resin (a) is an acrylic resin that essentially reacts through said primary carbamate groups in forming the outermost primer coating layer.

14. A method of coating a substrate, comprising the steps of:
(a) applying a primer coating composition, said primer coating composition comprising
(i) a resin selected from the group consisting of novolac resin having carbamate functionality and acrylic resin having primary carbamate functionality and
(ii) aminoplast resin;
(b) curing the applied primer coating composition to form a primer coating layer;
(c) applying a topcoat composition over the primer coating layer; and
(d) curing the applied topcoat composition to form a topcoat layer.

15. A method according to claim 14, wherein the primer coating composition is applied over a electrocoat primer layer.

16. A method according to claim 14 or claim 15, wherein the topcoat composition is applied in two layers as a clearcoat layer wet-on-wet over a basecoat layer.

17. A method according to any one of claims 14-16, wherein the resin in step (a)(i) is a novolak resin.

18. A method according to claim 17, wherein the carbamate functionality on a novolac resin is primary carbamate functionality.

19. A method according to claim 17 or claim 18, wherein the carbamate functionality is β-hydroxy functionality.

20. A method according to any one of claims 17-19, wherein said novolac resin is in accordance with any one of claims 7, 8 or 9.

21. A method according to any one of claims 14-16, wherein resin (a) is an acrylic resin.

22. A method according to claim 21, wherein said acrylic resin is in accordance with claim 12 or claim 13.

23. A method according to any one of claims 14-22, wherein resin (b) is a melamine resin.

24. A method according to claim 21, wherein resin (b) is a monomeric or polymeric melamine resin.

25. A coating composition, comprising
(a) an acrylic or novolac resin having carbamate functionality and
(b) an aminoplast.
